(19) Europäisches Patentamt / European Patent Office / Office européen des brevets

(11) **EP 2 916 472 B1**

(12) **EUROPEAN PATENT SPECIFICATION**

(45) Date of publication and mention
of the grant of the patent:
**12.10.2016 Bulletin 2016/41**

(51) Int Cl.:
*H04B 10/50* (2013.01)      *H04J 14/00* (2006.01)

(21) Application number: **14158224.7**

(22) Date of filing: **06.03.2014**

(54) **ALL-OPTICAL ORTHOGONAL FREQUENCY DIVISION MULTIPLEXING (OFDM) TRANSMITTER**

REIN OPTISCHER ORTHOGONALER FREQUENZMULTIPLEX-(OFDM)-SENDER

ÉMETTEUR OFDM (MULTIPLEXAGE PAR RÉPARTITION ORTHOGONALE DE LA FRÉQUENCE) ENTIÈREMENT OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.09.2015 Bulletin 2015/37**

(73) Proprietor: **Guan, Pengyu**
**2850 Naerum (DK)**

(72) Inventors:
• **Guan, Pengyu**
**2850 Nærum (DK)**
• **Mulvad, Hans Christian Hansen**
**2400 København NV (DK)**
• **Oxenløwe, Leif Katsuo**
**3400 Hillerød (DK)**

(74) Representative: **Plougmann Vingtoft a/s**
**Rued Langgaards Vej 8**
**2300 Copenhagen S (DK)**

(56) References cited:
**EP-A1- 1 641 139**

• **JUNYAO MEI ET AL: "An all-optical OFDM system based on time lenses", ASIA COMMUNICATIONS AND PHOTONICS CONFERENCE AND EXHIBITION,, 2 November 2009 (2009-11-02), pages 1-6, XP031623302, ISBN: 978-1-55752-877-3**
• **JUNHE ZHOU: "All-Optical Discrete Fourier Transform Based on Multilevel Phase Modulation and a Dispersive Element", IEEE PHOTONICS TECHNOLOGY LETTERS, IEEE SERVICE CENTER, PISCATAWAY, NJ, US, vol. 24, no. 8, 1 April 2012 (2012-04-01), pages 685-687, XP011440349, ISSN: 1041-1135, DOI: 10.1109/LPT.2012.2186632**
• **MASATAKA NAKAZAWA ET AL: "Ultrafast Coherent Optical Transmission", IEEE JOURNAL OF SELECTED TOPICS IN QUANTUM ELECTRONICS, IEEE SERVICE CENTER, PISCATAWAY, NJ, US, vol. 18, no. 1, 1 January 2012 (2012-01-01), pages 363-376, XP011398911, ISSN: 1077-260X, DOI: 10.1109/JSTQE.2011.2125781**

EP 2 916 472 B1

## Description

FIELD OF THE INVENTION

The present invention relates to an all-optical orthogonal frequency division multiplexing (OFDM) transmitter. The invention further relates to a method of all-optical generation of OFDM signals.

BACKGROUND OF THE INVENTION

The Internet traffic is constantly growing, and it is soon expected to reach the capacity of the currently installed communication systems. Consequently, there is a strong focus in research laboratories on how to better exploit the available bandwidth of the installed optical fiber-based links. In particular, spectrally efficient multiplexing techniques where subcarriers or channels at different wavelengths are placed at closely spaced frequencies have received significant attention. In the past decades, dense wavelength division multiplexing (DWDM) has enabled significant increases in capacity, but this is no longer sufficient.

Today, one of the most studied multiplexing techniques is orthogonal frequency division multiplexing (OFDM), which enables even closer frequency spacing than DWDM, approaching - or even equal to - the subcarrier symbol rate, which is the theoretical limit (cf references below). The OFDM subcarriers have a square-like time-domain waveform, and correspondingly a sinc-like profile in the frequency domain with nulls at evenly spaced frequencies, with spacing equal to the symbol rate. The subcarriers are placed with the same spacing, thus overlapping with a frequency null-point of all other subcarriers. This so-called "orthogonality" condition implies that the subcarrier channels can be demultiplexed (separated) at the receiver ideally without inter carrier cross-talk (ICI), even though their spectra are strongly overlapping.

Typically, generation of OFDM signals is carried out in the electrical domain using digital signal processing (DSP) and digital/analog conversion before/during multiplexing the sub-carriers into the OFDM signal. In this case, however, the capacity of the OFDM signal is limited by the speed of electronics to about 100 Gbit/s.

On the other hand, in "all-optical OFDM" (AO-OFDM) the demultiplexing is performed optically, enabling significantly larger capacity for the OFDM signal. The AO-OFDM approach is also attractive since digital/analog conversion and DSP are avoided both for the demultiplexing (at the receiver) and for the multiplexing (at the transmitter).

In [1] is described an AO-OFDM transmitter using rectangular-like electrical modulation to generate the OFDM subcarriers from individual laser comb-lines, and then combine them using a coupler. However, such a transmitter is limited by the electronics bandwidth in realizing the fast symbol transitions of OFDM subcarriers.

In [2-4] are described that OFDM subcarriers can also be generated from data-modulated optical pulses using optical inverse Fourier transforms (OIFT) based on cascaded delay interferometers [3], arrayed waveguide grating routers [2], or wavelength selective switches (WSS) [4]. However, the complexity of these OIFT schemes generally increases with the number of independent data-subcarriers that must be generated. Thus, such approaches do not scale well to large numbers of channels. Another problem of this system is the power consumption, which will scale linearly with the number of channels.

Hence, an improved OFDM transmitter would be advantageous, and in particular an AO-OFDM transmitter, which would scale efficiently in both power and system cost to a large number of channels would be advantageous.

Background references:

[1] Hillerkuss , et al., "26 Tbit s-1 line-rate super-channel transmission utilizing all-optical fast Fourier transform processing", Nature Photon., vol. 5, pp.364 -371 2011
[2] Lowery and Du, "All-optical OFDM transmitter design using AWGRs and low-bandwidth modulators." Optics Express 19.17 (2011): 15696-15704.
[3] Hillerkuss, et al., "Simple all-optical .FFT scheme enabling Tbit/s real-time signal processing," Opt. Express 18(9), 9324-9340 (2010).
[4] Du, et al: "Flexible All-Optical OFDM using WSSs." National Fiber Optic Engineers Conference. Optical Society of America, 2013.

The document JUNHE ZHOU: "All-Optical Discrete Fourier Transform Based on Multilevel Phase Modulation and a Dispersive Element" discloses an optical Fourier transform of a K-D-K configuration for use in all-optical OFDM.

OBJECT OF THE INVENTION

It is a further object of the present invention to provide an alternative to the prior art.

In particular, it may be seen as an object of the present invention to provide an AO-OFDM transmitter that solves the above mentioned problems of the prior art of scaling efficiently to a large number of OFDM channels, and in particular to utilize existing DWDM transmitters where the DWDM signal is converted into OFDM channels using this invention.

SUMMARY OF THE INVENTION

Thus, the above described object and several other objects are intended to be obtained in a first aspect of the invention by providing an all-optical orthogonal frequency division multiplexing (OFDM) transmitter for generating an OFDM output signal from an input Nyquist optical time domain multiplexing (N-OTDM) signal. The transmitter comprises a first time-domain optical Fourier transform (OFT) assembly. The first OFT assembly is of a K-D-K configuration and comprising in said order a first phase modulator, a dispersive element, and a second phase modulator. The first phase modulator is configurable for exercising a parabolic phase modulation so as to substantially linearly frequency chirp an optical signal to have a chirp rate $K_{M311}$. The dispersive element has a dispersion parameter $D_{M31}$. The second phase modulator is also configurable for exercising a parabolic phase modulation so as to substantially linearly frequency chirp an optical signal to have a chirp rate $K_{M312}$. The phase modulators are configurable to provide nominally identical chirp rates, $K_{M311} = K_{M312} = K_{M31}$, and the OFT assembly is further configurable such that $D_{M31} = 1/K_{M31}$. In this way, a spectrally efficient OFDM output signal may be generated from the input N-OTDM signal, which may in turn e.g. be generated from conventional signal types as further described below. An important advantage of using the K-D-K configuration of the OFT, compared to a D-K-D configuration is that in the D-K-D configuration, the first dispersive element results in temporal broadening of the waveform and thus requires insertion of temporal guard bands to avoid cross talk. Such temporal guard bands are detrimental in obtaining a high spectral efficiency of the OFDM signal.

In embodiments of the invention, at least one of the phase modulators are implemented by use of four-wave mixing (FWM) in a nonlinear optic element, wherein the nonlinear optic element is optically pumped with chirped pump pulses.

In one embodiment the nonlinear optic element is a highly nonlinear fiber (HNLF).

In embodiments of the invention, at least one of the phase modulators are implemented by use of an electro-optic phase modulator (EOM).

In general, any suitable phase modulator with a maximum operation bandwidth large enough to encompass the desired number of subcarriers, and adaptable to perform the required parabolic or quadratic phase modulation sufficiently fast may be used.

In an embodiment of the invention, the dispersive element is a dispersion compensating fiber (DCF).

A Nyquist optical time domain multiplexing (N-OTDM) signal is understood in the field to be a signal comprising a number of signal pulses having a substantially rectangular spectral distribution, resulting in that each signal pulse has a temporal shape substantially describing a sinc-function. Thus, temporally adjacent pulses will generally overlap in time. However, the temporal spacing of the pulses is chosen so that maxima of the pulses coincides with zero crossings in the surrounding pulses. Thus, the signal may be detected without intersymbol interference (ISI). See, e.g. Hu, et al., "320 Gb/s Nyquist OTDM received by polarization-insensitive time-domain OFT", Optics Express 22(1), pp. 110, 2013, for a further information regarding N-OTDM signals.

In an embodiment of the invention, the transmitter is a dense wavelength division multiplexing (DWDM) to OFDM converter. The transmitter is further adapted to generate the input N-OTDM signal from an input DWDM signal comprising a number of DWDM channels. The transmitter further comprises a pulse shaper configured for temporally shaping pulses of the input DWDM signal into an OFDM-like intermediate signal, the OFDM-like intermediate signal having a substantially rectangular temporal pulse shape, and a substantially sinc-shaped frequency distribution of each subcarrier. The transmitter even further comprises a second OFT assembly for converting the OFDM-like intermediate signal to the input N-OTDM signal. In this way, a conventional DWDM input signal with a channel spacing of $\Delta\omega_{S02}$, e.g. as generated by commercially available DWDM transmitters, may be conveniently converted to the OFDM output signal in a channel-scalable and all-optical manner. Firstly, the conversion is performed by use of a temporal waveform-shaping unit directly on the DWDM signal to create a narrow rectangular-shaped waveform, with resulting sinc-shaped broad spectra. This broad OFDM-like signal with a subcarrier spectral spacing of $\Delta\omega_{S13} = \Delta\omega_{S02}$ is then spectrally compressed using the second OFT assembly and the first OFT assembly into the desired real OFDM output signal with a tributary spacing of $\Delta\omega_{S41}$, with the N-OTDM signal as an intermediate stage. The second OFT assembly converts the OFDM-like signal into the N-OTDM which has a tributary (temporal) spacing $\Delta T_{S21} = \Delta\omega_{S13}/K_{M23}$ between subsequent pulses in the pulse train. Then the N-OTDM signal is converted back to the OFDM signal via the first OFT assembly. A spectral compression ratio of the compression of the broad OFDM-like signal is given by $\Delta\omega_{S41}/\Delta\omega_{S02} = -K_{M31}/K_{M23}$, where $K_{M31}$ is the linear chirp rate of the first OFT unit, and $K_{M23}$ is a linear chirp rate of the second OFT unit.

In an embodiment of the invention, the second OFT assembly is of the K-D-K configuration, comprising in order a first phase modulator, a dispersive element, and a second phase modulator. The first phase modulator is configurable for exercising a parabolic phase modulation to substantially linearly phase chirp an optical signal to have a chirp rate $K_{M231}$. The dispersive element has a dispersion parameter $D_{M23}$. The second phase modulator is also configurable for exercising a parabolic phase modulation to substantially linearly phase chirp an optical signal to have the chirp rate $K_{M232}$. The phase modulators are configurable to provide nominally identical chirp rates, $K_{M231} = K_{M232} = K_{M23}$, and the OFT assembly is further configurable such that $D_{M23} = 1/K_{M23}$.

In an embodiment of the invention, the second OFT assembly is of a D-K-D configuration, comprising in order a first dispersive element, a phase modulator, and a second dispersive element. The first dispersive element has a dispersion parameter $D_{M231}$. The phase modulator is configurable for exercising a parabolic phase modulation to substantially linearly phase chirp an optical signal to have a chirp rate $K_{M23}$. The second dispersive element has a dispersion parameter $D_{M232}$. The dispersive elements are configured to have nominally identical dispersion parameters, $D_{M231} = D_{M232} = D_{M23}$, and the OFT assembly is further configurable such that $D_{M23} = 1/K_{M23}$. In this way, only a single phase modulator is needed to form the second OFT assembly.

In an embodiment of the invention, the transmitter is an OTDM to OFDM converter, wherein the transmitter is further adapted to generate the input N-OTDM signal from an input OTDM signal, the transmitter further comprising a spectral filter, the spectral filter being substantially a raised-cosine filter configured for converting the input OTDM signal into the input N-OTDM signal. In this way, an OTDM to OFDM converter may be achieved, wherein the input, conventional, OTDM signal is first spectrally filtered to generate the input N-OTDM signal as an intermediate signal. The N-OTDM signal is then converted to the OFDM signal by optically Fourier transforming the signal using the first K-D-K OFT assembly. The resulting OFDM signal will have a subcarrier (spectral) spacing of $\Delta\omega_{S41} = -K_{M31}\Delta T_{S21}$, where $\Delta T_{S21}$ is the tributary spacing of the N-OTDM signal and $K_{M31}$ is the linear chirp rate of the first OFT assembly.

In principle, a filter bandwidth of the spectral filter should be equal to a baud rate of the OTDM signal. However, the inventors have realised an advantage of having a guard interval (GI) between each group of N-OTDM tributaries (corresponding to a group of concurrent OFDM subcarrier pulses), in which case, the spectral filter bandwidth is broader than the baud rate (B) of the signal, by a factor of B/(1-GI%), where GI% is the temporal width of the guard interval, relative to the OFDM symbol interval. In this way, parts of pulse tails from neighbouring bit slots which fall within a gate-window under consideration are mapped to wavelengths well separated from the desired OFDM spectrum to reduce cross talk.

In an embodiment of the invention, the raised-cosine filter is or comprises a wavelength selective switch (WSS).

Furthermore, the above described object and several other objects are intended to be obtained in a second aspect of the invention by providing an all-optical orthogonal frequency division multiplexing (OFDM) transmitter for generating an OFDM output signal from an input flat-top optical time domain multiplexing (OTDM) signal having a substantially flat-top spectrum. The transmitter comprises a first time-domain optical Fourier transform (OFT) assembly, the first OFT assembly being of a K-D-K configuration and comprising in said order a first phase modulator, a dispersive element, and a second phase modulator. The first phase modulator is configurable for exercising a parabolic phase modulation to substantially linearly phase chirp an optical signal so as to have a chirp rate $K_{M321}$. The dispersive element has a dispersion parameter $DM_{32}$. The second phase modulator is also configurable for exercising a parabolic phase modulation to substantially linearly phase chirp an optical signal so as to have a chirp rate $K_{M322}$. The phase modulators are configured so that substantially $K_{M321} = K_{M322} = K_{M32}$, and further so that $D_{M32} = 1/K_{M32}$. The transmitter further comprises a pulse shaper provided after the OFT assembly and operable to provide substantially rectangular pulses with a temporal width of $T_{M42}$. In this way, a spectrally efficient OFDM output signal may be generated from the input flat-top OTDM signal, which may e.g. be generated from conventional signal types as described below. An important advantage of using a K-D-K configuration of the OFT, compared to a D-K-D configuration is that in the D-K-D configuration, the first dispersive element results in temporal broadening of the waveform and thus requires insertion of temporal guard bands to avoid cross talk. Such temporal guard bands are detrimental in obtaining a high spectral efficiency of the OFDM signal. The first OFT assembly converts the flat-top OTDM signal to a DWDM signal with a channel spacing of $\Delta\omega_{S32} = -K_{M32}\Delta T_{S22}$, where $\Delta T_{S22}$ is the tributary spacing of the flat-top OTDM signal. To achieve frequency orthogonality of the resulting OFDM signal, the temporal width of the pulse shaper is chosen to fulfil $\Delta\omega_{S41} = 2\pi/T_{M42}$, i.e. that the channel spacing is equal to the subcarrier spectral width.

In some embodiments, a guard interval is introduced between each group of OTDM tributaries so that the pulse tails from neighbouring bit slots within the gate-window are mapped to wavelengths well separated from the desired OFDM spectrum. These wavelengths may finally be removed by use of an optical bandpass filter (OBF).

According to an alternative aspect of the invention, in case of "short" OTDM pulses, i.e. satisfying the relationship $D \gg \frac{1}{2}\delta T_{S01}^2$, the first phase modulator may be omitted. Here $\delta T_{S01}$ is a temporal pulse width of the optical pulses comprised by the OTDM signal. In this case (a so-called "D-K" configuration, since the first "K" is omitted), complete optical Fourier transformation is only achieved within the finite time aperture $T_{M42}$. In this way, the optical setup may be simplified.

In an embodiment of the invention, the transmitter is a DWDM to OFDM converter, wherein the transmitter is further adapted to generate the input flat-top OTDM signal from an input DWDM signal, the transmitter further comprises a third OFT assembly for converting the input DWDM signal into the input flat-top OTDM signal. In this way, a conventional DWDM input signal, e.g. from a commercially available DWDM transmitter, may be conveniently converted to the OFDM output signal in a channel-scalable and all-optical manner. First, the third OFT assembly is used to convert the DWDM signal to a spectrally compressed DWDM signal, with the flat-top OTDM signal as an intermediate signal. This spectrally compressed DWDM signal is then converted into the OFDM output signal by a temporal waveform shaping unit, or pulse shaper, creating a rectangularly-shaped time domain waveform resulting in the sinc-function shaped optical spectra characteristic of the OFDM signal.

In an embodiment of the invention, the third OFT assembly is of the K-D-K configuration and comprising in order a first phase modulator, a dispersive element, and a second phase modulator. The first phase modulator being configurable for exercising a parabolic phase modulation to substantially linearly phase chirp an optical signal so as to have a chirp rate $K_{M141}$. The dispersive element has a dispersion parameter $D_{M14}$. The second phase modulator is also configurable for exercising a parabolic phase modulation to substantially linearly phase chirp an optical signal so as to have the chirp rate $K_{M142}$. The phase modulators are configurable to have nominally identical chirp rates, $K_{M141} = K_{M142} = K_{M14}$, and the third OFT assembly is further configurable such that $D_{M14} = 1/K_{M14}$.

In an embodiment of the invention, the third OFT assembly is of the D-K-D configuration comprising in order a first dispersive element, a phase modulator, and a second dispersive element. The first dispersive element has a dispersion parameter $D_{M141}$. The phase modulator is configurable for exercising a parabolic phase modulation to substantially linearly phase chirp an optical signal so as to have a chirp rate $K_{M14}$. The second dispersive element has a dispersion parameter $D_{M142}$. The dispersive elements are configured to have nominally identical dispersion parameters, $D_{M141} = D_{M142} = D_{M14}$, and the OFT assembly is further configurable such that $D_{M14} = 1/K_{M14}$.

In an embodiment of the invention, the third OFT assembly is of a K-D configuration comprising in order a phase modulator being configurable for exercising a parabolic phase modulation to substantially linearly phase chirp an optical signal so as to have a chirp rate $K_{M14}$, and a dispersive element with a dispersion parameter $D_{M14}$, wherein the OFT assembly is further configurable such that $D_{M14} = 1/K_{M14}$. This simplified third OFT assembly may be used in the case where $|K_{M14}| \gg \frac{1}{2}\delta\omega_{S02}^2$, where $\delta\omega_{S02}$ is a spectral width of the input signal to the third OFT assembly, i.e. the input DWDM signal. In this way, a simplified optical setup is achieved, in that a phase modulator or a dispersive element may be omitted.

In an embodiment of the invention, the transmitter is an OTDM to OFDM converter, wherein the transmitter is further adapted to generate the input flat-top OTDM signal from an input OTDM signal. In this case, the transmitter further comprises a spectral filter configured to convert the input OTDM signal to the input flat-top OTDM signal. In one embodiment of the invention, the spectral filter is a wavelength selective switch (WSS).

Additionally, the abovementioned object and several other objects are intended to be obtained in a third aspect of the invention by providing a method of generating an orthogonal frequency division multiplexing (OFDM) signal from an input DWDM signal or an input OTDM signal. The method comprises either:

- converting the input DWDM signal to a N-OTDM signal by

  ○ temporally waveform shaping the input DWDM signal, and
  ○ optically Fourier transforming the temporally shaped signal into the N-OTDM signal, or

- converting the input OTDM signal to the N-OTDM signal by spectrally filtering the input OTDM signal with a substantially spectrally rectangular optical filter.

The method further comprises optically Fourier transforming the N-OTDM signal to the OFDM signal by use of an OFT assembly having a K-D-K configuration.

In an embodiment of the inventive method, the substantially spectrally rectangular optical filter is chosen to have a bandwidth equal to B/(1-GI%), where B is a baud rate of the input OTDM signal and GI% is a relative temporal width of a chosen guard interval between subsequent groups of N-OTDM tributaries. Finally, the above described object and several other objects are intended to be obtained in a fourth aspect of the invention by providing a method of generating an orthogonal frequency division multiplexing (OFDM) signal from an input DWDM signal or an input OTDM signal. The method comprises generating a flat-top OTDM signal having a substantially flat-top spectral profile, by either

- optically time-domain Fourier transforming the input WDM signal to the flat-top OTDM signal, or
- spectrally filtering the input OTDM signal to result in the flat-top OTDM signal,

the method further comprising:

- optically time-domain Fourier transforming the flat-top OTDM signal by use of an OFT assembly having a K-D-K configuration, and
- temporally shaping Fourier transformed signal into the OFDM signal.

The first and second aspects of the present invention may each be combined with any of the other aspects. These and other aspects of the invention will be apparent from and elucidated with reference to the embodiments described hereinafter.

BRIEF DESCRIPTION OF THE FIGURES

The OFDM transmitter according to the invention will now be described in more detail with regard to the accompanying figures. The figures show ways of implementing the present invention and is not to be construed as being limiting to other possible embodiments falling within the scope of the attached claim set.

> Figure 1 illustrates the sinc-shaped spectral profile of an OFDM signal,
> Figure 2 illustrates the different paths of converting an OTDM or DWDM signal to an OFDM signal according to the invention,
> Figure 3 shows details of the two paths of generating an OFDM signal from a DWDM signal according to the invention,
> Figure 4 shows details of the two paths of generating an OFDM signal from an OTDM signal according to the invention,
> Figure 5 shows details of the elements of the system shown in Figures 3 and 4,
> Figure 6 shows a setup of an example of an embodiment of the invention, and
> Figure 7 shows experimental results according to the example.

DETAILED DESCRIPTION

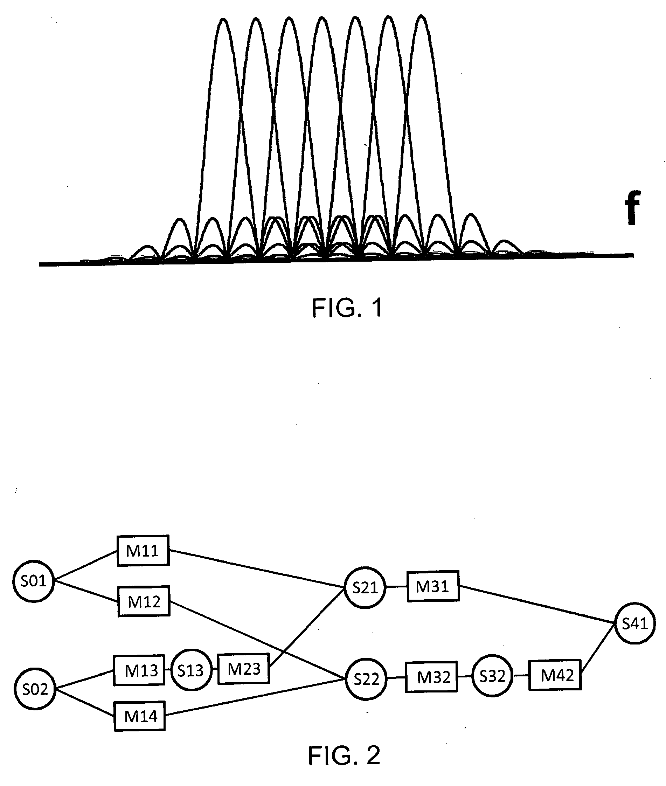

Figure 1 shows the spectral shape of an OFDM signal having a sinc-shape (in the form $\sin(x)/x$), in this case comprising 7 channels. It is seen that the spectra of the individual channels overlap the other channels - but it may also be seen that the signals are orthogonal in that where a signal has its peak, the other signals have zero crossings. The temporal shape of the pulses of the OFDM signal are substantially rectangular, and may in principle be temporally aligned back to back, i.e. with substantially a duty-cycle of unity. In practise, a small guard interval between the OFDM pulses may be advantageous, to allow for a certain amount of e.g. timing jitter, or other detrimental effects. OFDM signals are attractive due to their high spectral efficiency, meaning that a large number of channels may be packed into a relatively narrow wavelength band.

Figure 2 illustrates the four different paths of converting an OTDM or DWDM signal to an OFDM signal according to the invention. Signals are designated with an 'S', while system elements are designated an 'M'. Input to the systems are either an OTDM signal S01, or a DWDM signal S02. In all the four different paths results in an OFDM (S41) signal being generated. It is seen that the paths interweaves each other, such that, e.g. generation from an OTDM signal (S01) may both occur using the second OFT assembly M32, or the OFT assembly M31. Likewise, generation from a DWDM signal (S02) may also be performed using either of the OFT assemblies (M31, M32). Common to all paths is the use of an OFT of a K-D-K configuration M31, M32, i.e. two phase modulations and an intermittent dispersive element.

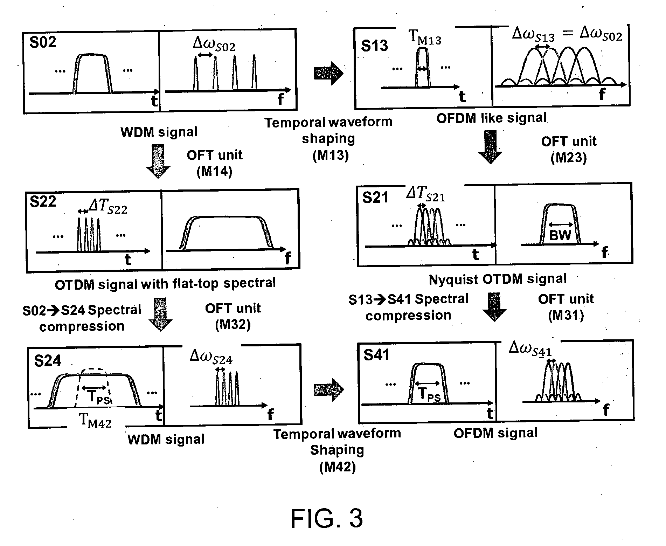

Figure 3 illustrates the two paths of converting a WDM, or dense-WDM (DWDM) input signal S02 (top left) with a channel spacing of $\Delta\omega_{S02}$ to an OFDM signal S41 (bottom right) with a subcarrier spacing of $\Delta\omega_{S41}$.

Left hand side of the figure shows what may be seen as a spectral compressor followed by a rectangular temporal waveform shaping stage. The signals are illustrated in the time domain (t) on the left side and frequency domain (f) on the right side. Firstly, a third optical Fourier transformation (OFT) unit M14 is used to exchange between the temporal and spectral envelopes of the input signal. The third OFT assembly may be implement as any one of a K-D-K, D-K-D, or even K-D configuration. The latter configuration may be used provided that the spectral width of the input WDM signal channels is small, i.e. $|K_{M14}| \gg \frac{1}{2}\delta\omega_{S02}^2$, where $\delta\omega_{S02}$ is the spectral width of a WDM channel. It is seen that the substantially coinciding temporal envelopes and the separate spectral envelopes of the input signal S02 are exchanged by the third OFT unit M14, so that in the signal S22, the temporal envelopes are separated while the spectral envelopes are overlapping. This signal S22 may be seen as an OTDM signal having a substantially flat-top spectrum. The signal S22 is then subjected to another Fourier transformation in the OFT unit M32, resulting in an intermediate WDM signal S24. Comparing the input DWDM signal S02 and the intermediate WDM signal S24, the temporal pulse width has increased and the spectral spacing between channels $\Delta\omega$ have been decreased. Thus, the signal S02 has been spectrally compressed. In a final step, the spectrally compressed WDM signal S24 is passed through a pulse shaper and optical bandpass filter (OBF) M42, to give pulses which are substantially rectangular in the time domain, and thus sinc-shaped in the frequency domain, and to remove unwanted spectral artefacts of the conversion.

Right hand side of the figure shows conversion in what may be seen as a rectrangular temporal waveform shaping followed by a spectral compressor. The input WDM signal S02 is injected into a pulse shaper M13 to make relatively temporally short, rectangular pulses, which in the frequency domain may be seen to be spectrally broad OFDM-like signals S13, i.e. with a sinc shape. These OFDM-like signals S13 are then spectrally compressed by optical Fourier transformation M23 into a Nyquist-OTDM signal S21, and back into the output OFDM signal S41 in two OFT assemblies M23, M31. The spectral compression ratio through the two OFT assemblies is $\frac{\Delta\omega_{S41}}{\Delta\omega_{S02}} = -K_{M31}/K_{M23}$.

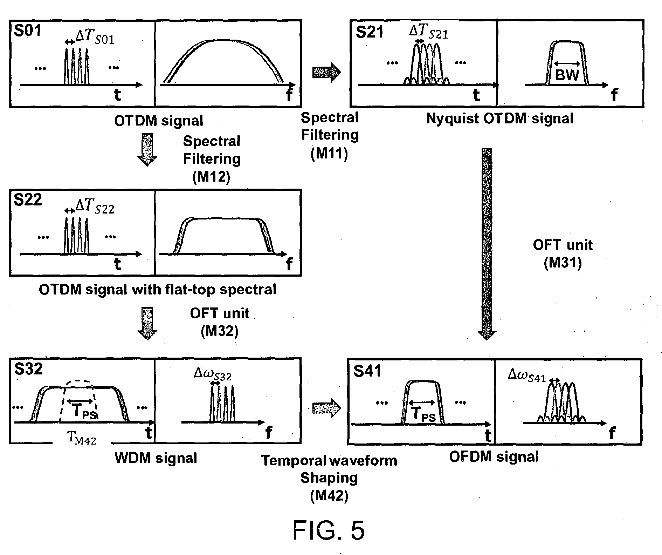

Figure 5 shows, analogously to figure 3, the two paths of converting an OTDM input signal S01 (top left) with a tributary spacing $\Delta T_{S01}$ to an OFDM signal S41 (bottom right) with a subcarrier spacing $\Delta\omega_{S41}$ and a tem-

poral pulse width of $T_{S41}$.

Left side of the figure illustrates how the OFDM signal S01 is first turned into an OTDM signal with a flat-top spectrum S22 using a spectral filter M12, and then converted to a WDM signal S32 with channel spacing $\Delta\omega_{S32} = -K_{M32\Delta}T_{S01}$ using a K-D-K OFT unit M32. The remaining steps and optical units correspond to those dicussed above in connection with figure 3, left side. If the input pulse width $\delta T_{S01}$ is very narrow such that

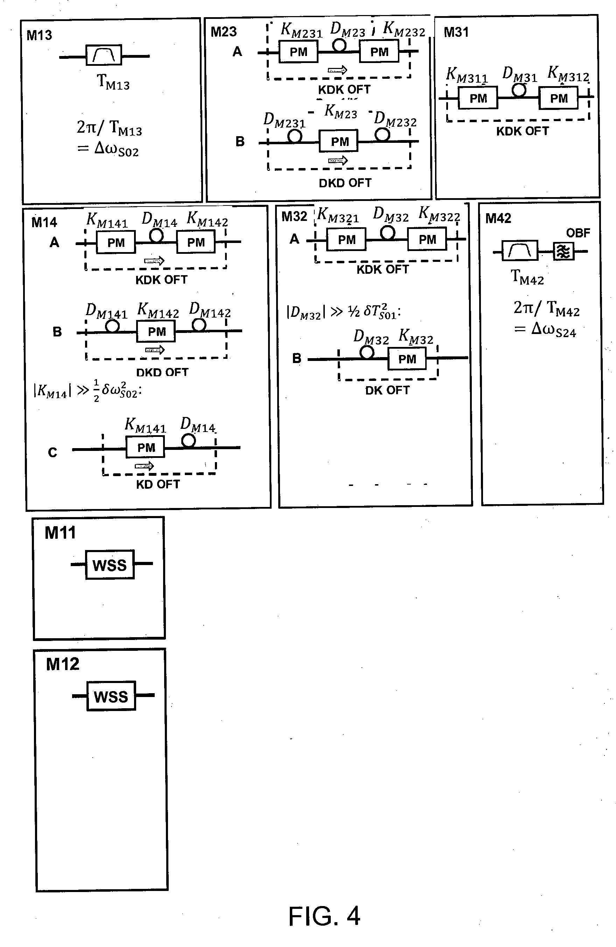

$$|D_{M32}| \gg \tfrac{1}{2}\,\delta T_{S01}^2,$$ then the first phase modulation stage can be omitted, which leads to the simpler D-K configuration (see figure 4, M32, B). A rectangular pulse shaper (gate-width $T_{M42}$) M42 is then used to select the temporal center of the WDM signal, resulting in an OFDM signal S41 with subcarrier spectral width given by $2\pi/T_{M42}$, set equal to $\Delta\omega_{S41}$ to achieve Frequency orthogonality. Note that in the D-K configuration the complete OFT is only achieved within the finite time aperture $T_{M42}$. Furthermore, a guard interval may be introduced between each group of OTDM tributaries so that pulse tails from neighbouring bit slots falling within the gate-window are mapped to wavelengths well separated from the desired OFDM spectrum. These wavelengths are finally removed by an optical bandpass filter (OBF) in module M42.

Right side of the figure illustrates how the OTDM signal S01 is first converted to a Nyquist OTDM signal S21 using spectral filtering M11. The spectral filter M11 may e.g. be implemented by a WSS (wavelength selective switch). Then, the OFDM signal S41 is generated using the first time-domain OFT unit M31, as described above in connection with figure 3. The first OFT assembly thus performs exchanges between temporal and spectral envelopes of the Nyquist OTDM signal S21 and the OFDM signal S41.

Figure 4 shows the different elements which may be used to realize the WDM to OFDM transmitter as discussed above in relation to figure 3, or the OTDM to OFDM transmitter as discussed above in relation to figure 5. The phase-modulation in the OFT assemblies (M14,M23,M31,M32) may be implemented by various means, for example by four-wave mixing (FWM) using chirped pump pulses, cross-phase modulation (XPM) using parabolic intensity profile pump pulses, or electro-optic phase-modulation using an electrical driving signal. The FWM & XPM effects stem from the nonlinear optical Kerr effect, which is commonly used for nonlinear optical signal processing. Common to the OFT assemblies is that the linear chirp rate K and the dispersion parameter D must be chosen to fulfil $D_x = \dfrac{1}{K_x}$. The OFT assemblies M31 and M32 are of the K-D-K configuration, while OFT assemblies M23 and M14 may be of either K-D-K or D-K-D configuration. M14 may even be of a K-D configuration wherein the first dispersive element is omitted cf.

the D-K-D configuration, provided that the spectral subcarrier width of the input signal is narrow, i.e.

$$|K_{M14}| \gg \tfrac{1}{2}\delta\omega_{S02}^2.$$

The dispersive element in the OFT units may be implemented by a standard fibre, such as a standard single mode fibre (SSMF) or a dispersion-compensation fibre (DCF). The skilled person will realize that other dispersive structures may also be used, provided that the required relationships between chirp rate and dispersion may be met.

The rectangular temporal waveform shaping (in pulse shapers M13, M42) may be implemented by FWM using rectangular pump pulses. To ensure frequency orthogonality after temporal shaping, the temporal filter bandwidth $T_{M13}$, $T_{M42}$ of the pulse shapers M13, M42 must be selected to match the subcarrier spacing of the incoming signal via the relationships $2\pi/T_{M13} = \Delta\omega_{S02}$ and analogously $2\pi/T_{M42} = \Delta\omega_{S24}$.

The optical spectral filters M11, M12 may be implemented using various types of standard optical filters or e.g. a wavelength selective switch (WSS).

EXAMPLE

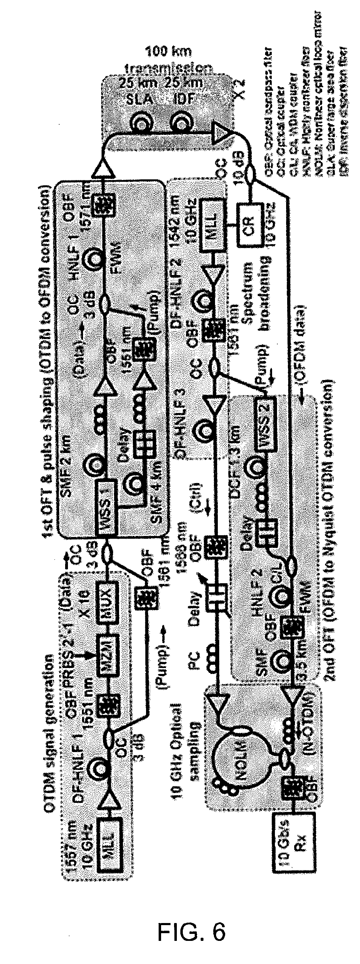

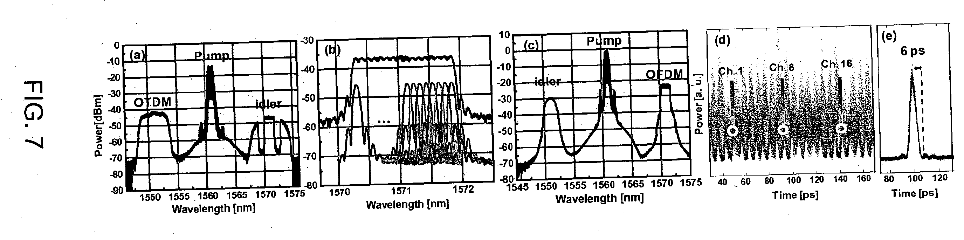

Figure 6 illustrates an experimental setup of an OFDM communication system, including an OFDM transmitter according to an embodiment of the invention. The setup is an implementation of the left hand side of figure 5, i.e. OTDM to OFDM generation via an intermediate WDM signal. A 160 Gbit/s OTDM-DPSK signal with 1.7 ps wide pulses, centered at 1551 nm with a guard interval of 44 ps between each group of 16 tributaries was generated and further rectangular filtered with a wavelength selective switch (WSS1). The generated OTDM data signal then underwent complete OFT in a D-K time lens. As the first step of the OFT process, the 160 Gbit/s OTDM signal was dispersed in a 2 km SSMF, resulting in overlapping 160 ps flat-top linearly-chirped pulses. The quadratic phase modulation and pulse shaping were here simultaneously achieved in a FWM process (HNLF 1) using 80 ps linearly chirped rectangular pump pulses (1561 nm), obtained through filtering in WSS1 and 4 km SSMF propagation. Figure 7(a) shows the spectrum after FWM. The center part of the idler is the 16 subcarrier OFDM spectrum with channel spacing 12.5 GHz, also shown in Figure 7(b). The empty bands in the idler spectrum in Figure 7(a) originate from the 44 ps guard-intervals in the OTDM signal. Figure 7(b) also shows the spectra obtained for individual OFDM subcarriers, where the characteristic sinc-shape can be observed. The 16-carrier OFDM spectrum was extracted by a 2.8 nm OBF (1571 nm) and launched into a 2x50 km SLA-IDF dispersion-managed link. It can be noted that, as the 160 Gbit/s OTDM-DPSK signal was generated from a 10 Gbit/s PRBS ($2^7$-1) signal and a PRBS ($2^7$-1) maintaining passive fibre-delay multiplexer, all 16 subcarriers in an OFDM symbol interval carry different information, resulting in decorrelated OFDM subcarriers. In the receiver, a FWM-based OFT time lens (HNLF 2) was used for OFDM to N-OTDM conversion, and a NOLM (nonlinear optical loop mirror) was employed for the 10 GHz optical sampling using 1.1 ps wide control pulses. The FWM pump pulses (1561 nm) and NOLM control-pulses (1566 nm) were obtained via spectral broadening in DF-HNLFs (dispersion flattened highly nonlinear fibers) and OBF filtering. The rectangular 90 ps wide linearly-chirped pump pulses were obtained by filtering in WSS2 and 1.3 km DCF propagation. The spectrum after FWM is shown in Figure 7(c). The idler signal at 1551 nm was extracted by an OBF and propagated through 3.6 km SSMF, resulting in the 160 Gbaud N-OTDM signal shown in Figure 7(d). The tributary spacing was 6 ps, and the sinc-shaped waveform of a single tributary can be observed in Figure 7(e). The ISI-free point obtained in each tributary time-slot was sampled out using the NOLM, and a BER (bit-error-rate) of each tributary (subcarrier) was measured in a 10-Gbit/s pre-amplified DPSK receiver to verify error-free transmission.

Although the present invention has been described in connection with the specified embodiments, it should not be construed as being in any way limited to the presented examples. The scope of the present invention is set out by the accompanying claim set.

## Claims

1. An all-optical orthogonal frequency division multiplexing (OFDM) transmitter for generating an OFDM output signal from an input Nyquist optical time domain multiplexing (N-OTDM) signal, the transmitter comprising a first time-domain optical Fourier transform (OFT) assembly, the first OFT assembly being of a K-D-K configuration and comprising in said order

  - a first phase modulator, the first phase modulator being configurable for exercising a parabolic phase modulation so as to substantially linearly frequency chirp an optical signal to have a chirp rate $K_{M311}$
  - a dispersive element with a dispersion parameter $D_{M31}$, and
  - a second phase modulator also being configurable for exercising a parabolic phase modulation so as to substantially linearly frequency chirp an optical signal to have a chirp rate $K_{M312}$, wherein the phase modulators are configurable to provide nominally identical chirp rates, $K_{M311} = K_{M312} = K_{M31}$, and the OFT assembly is further configurable such that $D_{M31} = 1/K_{M31}$.

2. The OFDM transmitter according to claim 1 being a dense wavelength division multiplexing (DWDM) to OFDM converter, wherein the transmitter is further adapted to generate the input N-OTDM signal from an input DWDM signal comprising a number of DWDM channels, the transmitter further comprising:

  - a pulse shaper configured for temporally shaping pulses of the input DWDM signal into an OFDM-like intermediate signal, the OFDM-like intermediate signal having a substantially rectangular temporal pulse shape, and a substantially sinc-shaped frequency distribution of each channel, the transmitter further comprising
  - a second OFT assembly for converting the OFDM-like intermediate signal to the input N-OTDM signal.

3. The OFDM transmitter according to claim 2, wherein the second OFT assembly is of the K-D-K configuration, comprising in order

  - a first phase modulator, the first phase modulator being configurable for exercising a parabolic phase modulation to substantially linearly phase chirp an optical signal to have a chirp rate $K_{M231}$,
  - a dispersive element with a dispersion parameter $D_{M23}$, and
  - a second phase modulator also being configurable for exercising a parabolic phase modulation to substantially linearly phase chirp an optical signal to have the chirp rate $K_{M232}$, wherein the phase modulators are configurable to provide nominally identical chirp rates, $K_{M231} = K_{M232} = K_{M23}$, and the OFT assembly is further configurable such that $D_{M23} = 1/K_{M23}$.

4. The OFDM transmitter according to claim 2, wherein the second OFT assembly is of a D-K-D configuration, comprising in order

  - a first dispersive element with a dispersion parameter $D_{M231}$,
  - a phase modulator being configurable for exercising a parabolic phase modulation to substantially linearly phase chirp an optical signal to have a chirp rate $K_{M23}$, and
  - a second dispersive element with a dispersion parameter $D_{M232}$, wherein the dispersive elements are configured to have nominally identical dispersion parameters, $D_{M231} = D_{M232} = D_{M23}$, and the OFT assembly is further configurable such that $D_{M23} = 1/K_{M23}$.

5. The OFDM transmitter according to claim 1 being an OTDM to OFDM converter, wherein the transmitter is further adapted to generate the input N-OTDM signal from an input OTDM signal, the transmitter further comprising a spectral filter, the spectral filter being substantially a raised-cosine filter configured for converting the input OTDM signal into the input N-OTDM signal.

6. The OFDM transmitter according to claim 5, wherein the raised-cosine filter is or comprises a wavelength selective switch (WSS).

7. An all-optical orthogonal frequency division multiplexing (OFDM) transmitter for generating an OFDM output signal from an input flat-top optical time domain multiplexing (OTDM) signal having a substantially flat-top spectrum, the transmitter comprising a first time-domain optical Fourier transform (OFT) assembly, the OFT assembly being of a K-D-K configuration and comprising in said order:

- a first phase modulator, the first phase modulator being configurable for exercising a parabolic phase modulation to substantially linearly phase chirp an optical signal so as to have a chirp rate $K_{M321}$
- a dispersive element with a dispersion parameter $D_{M32}$, and
- a second phase modulator also being configurable for exercising a parabolic phase modulation to substantially linearly phase chirp an optical signal so as to have a chirp rate $K_{M322}$, wherein the phase modulators are configured so that substantially $K_{M321} = K_{M322} = K_{M32}$, and further so that $D_{M32} = 1/K_{M32}$, the transmitter further comprising a pulse shaper provided after the OFT assembly and operable to provide substantially rectangular pulses with a temporal width of $T_{M42}$.

8. The OFDM transmitter according to claim 7 being a DWDM to OFDM converter, wherein the transmitter is further adapted to generate the input flat-top OTDM signal from an input DWDM signal, the transmitter further comprising:

- a third OFT assembly for converting the input DWDM signal into the input flat-top OTDM signal.

9. The OFDM transmitter according to claim 8, wherein the third OFT assembly is of the K-D-K configuration and comprising in order

- a first phase modulator, the first phase modulator being configurable for exercising a parabolic phase modulation to substantially linearly phase chirp an optical signal so as to have a chirp rate $K_{M141}$,
- a dispersive element with a dispersion parameter $D_{M14}$, and
- a second phase modulator also being configurable for exercising a parabolic phase modulation to substantially linearly phase chirp an optical signal so as to have the chirp rate $K_{M142}$, wherein
the phase modulators are configurable to have nominally identical chirp rates, $K_{M141} = K_{M142} = K_{M14}$, and the third OFT assembly is further configurable such that $D_{M14} = 1/K_{M14}$.

10. The OFDM transmitter according to claim 8, wherein the third OFT assembly is of the D-K-D configuration comprising in order

- a first dispersive element with a dispersion parameter $D_{M141}$,
- a phase modulator being configurable for exercising a parabolic phase modulation to substantially linearly phase chirp an optical signal so as to have a chirp rate $K_{M14}$, and
- a second dispersive element with a dispersion parameter $D_{M142}$, wherein the dispersive elements are configured to have nominally identical dispersion parameters, $D_{M141} = D_{M142} = D_{M14}$, and the OFT assembly is further configurable such that $D_{M14} = 1/K_{M14}$.

11. The OFDM transmitter according to claim 8, wherein the third OFT assembly is of a K-D configuration comprising in order

- a phase modulator being configurable for exercising a parabolic phase modulation to substantially linearly phase chirp an optical signal so as to have a chirp rate $K_{M14}$, and
- a dispersive element with a dispersion parameter $D_{M14}$, wherein
the OFT assembly is further configurable such that $D_{M14} = 1/K_{M14}$.

12. The OFDM transmitter according to claim 7 being an OTDM to OFDM converter, wherein the transmitter is further adapted to generate the input flat-top OTDM signal from an input OTDM signal, the transmitter further comprising:

- a spectral filter configured to convert the input OTDM signal to the input flat-top OTDM signal.

13. A method of generating an orthogonal frequency division multiplexing (OFDM) signal from an input DWDM signal or an input OTDM signal comprising either:

- converting the input DWDM signal to a N-OTDM signal by

  ○ temporally waveform shaping the input DWDM signal, and
  ○ optically Fourier transforming the temporally shaped signal into the N-OTDM signal, or

- converting the input OTDM signal to the N-OTDM signal by spectrally filtering the input OTDM signal with a substantially spectrally rectangular optical filter,
the method further comprising optically Fourier transforming the N-OTDM signal to the OFDM signal by use of an OFT assembly having a K-D-K configuration.

14. A method of generating an orthogonal frequency division multiplexing (OFDM) signal from an input DWDM signal or an input OTDM signal comprising:

- generating a flat-top OTDM signal having a substantially flat-top spectral profile, by either

∘ optically time-domain Fourier transforming the input WDM signal to the flat-top OTDM signal, or
∘ spectrally filtering the input OTDM signal to result in the flat-top OTDM signal,
the method further comprising:

- optically time-domain Fourier transforming the flat-top OTDM signal by use of an OFT assembly having a K-D-K configuration, and
- temporally shaping Fourier transformed signal into the OFDM signal.

**Patentansprüche**

1. Sender für ein ausschließlich optisches orthogonales
Frequenzmultiplexverfahren (OFMD) zum Erzeugen eines OFDM-Ausgangssignals aus einem Eingangssignal eines optischen Nyquist-Zeitmultiplexverfahrens (N-OTDM), wobei der Sender eine erste Anordnung für eine optische Zeitbereichs-Fouriertransformation (OFT) umfasst, wobei die erste OFT-Anordnung eine K-D-K-Konfiguration aufweist und in der genannten Reihenfolge Folgendes umfasst:

- einen ersten Phasenmodulator, wobei der erste Phasenmodulator zum Ausüben einer parabolischen Phasenmodulation konfigurierbar ist, um so ein optisches Signal mittels im Wesentlichen linearem Frequenz-Chirpen auf eine Chirp-Rate $K_{M311}$ einzustellen
- ein dispersives Element mit einem Dispersionsparameter $D_{M31}$, und
- einen zweiten Phasenmodulator, der ebenfalls zum Ausüben einer parabolischen Phasenmodulation konfigurierbar ist, um so ein optisches Signal mittels im Wesentlichen linearem Frequenz-Chirpen auf eine Chirp-Rate $K_{M312}$ einzustellen,
wobei die Phasenmodulatoren zum Bereitstellen von nominell identischen Chirp-Raten $K_{M311}$ = $K_{M312}$ = $K_{M31}$ konfigurierbar sind und die OFT-Anordnung weiterhin so konfigurierbar ist, dass $D_{M31}$ = 1/$K_{M31}$.

2. OFDM-Sender nach Anspruch 1, der ein DWDM (Dense Wavelength Division Multiplexing)-zu-OFDM-Konverter ist, wobei der Sender weiterhin dazu beschaffen ist, das N-OTDM-Eingangssignal aus einem DWDM-Eingangssignal zu generieren, das eine Anzahl von DWDM-Kanälen umfasst, wobei der Sender weiterhin umfasst:

- einen Impulsformer, der dazu konfiguriert ist, Impulse des DWDM-Eingangssignals temporal in ein OFDM-ähnliches Zwischensignal zu formen, wobei das OFDM-ähnliche Zwischensignal eine im Wesentlichen temporale Rechteck-Impulsform aufweist, sowie in eine im Wesentlichen sinc-förmige Frequenzverteilung jedes Kanals, wobei der Sender weiterhin umfasst:
- eine zweite OFT-Anordnung zum Umwandeln des OFDM-ähnlichen Zwischensignals in das N-OTDM-Eingangssignal.

3. OFDM-Sender nach Anspruch 2, wobei die zweite OFT-Anordnung die K-D-K-Konfiguration aufweist und in der genannten Reihenfolge Folgendes umfasst

- einen ersten Phasenmodulator, wobei der erste Phasenmodulator zum Ausüben einer parabolischen Phasenmodulation konfigurierbar ist, um so ein optisches Signal mittels im Wesentlichen linearem Phasen-Chirpen auf eine Chirp-Rate $K_{M231}$ einzustellen,
- ein dispersives Element mit einem Dispersionsparameter $D_{M23}$, und
- einen zweiten Phasenmodulator, der ebenfalls zum Ausüben einer parabolischen Phasenmodulation konfigurierbar ist, um so ein optisches Signal mittels im Wesentlichen linearem Phasen-Chirpen auf die Chirp-Rate $K_{M232}$ einzustellen, wobei
die Phasenmodulatoren zum Bereitstellen von nominell identischen Chirp-Raten $K_{M231}$ = $K_{M232}$ = $K_{M23}$ konfigurierbar sind und die OFT-Anordnung weiterhin so konfigurierbar ist, dass $D_{M23}$ = 1/$K_{M23}$.

4. OFDM-Sender nach Anspruch 2, wobei die zweite OFT-Anordnung eine D-K-D-Konfiguration aufweist und in der genannten Reihenfolge Folgendes umfasst

- ein erstes dispersives Element mit einem Dispersionsparameter $D_{M231}$,
- einen Phasenmodulator, der zum Ausüben einer parabolischen Phasenmodulation konfigurierbar ist, um so ein optisches Signal mittels im Wesentlichen linearem Phasen-Chirpen auf eine Chirp-Rate $K_{M23}$ einzustellen, und
- ein zweites dispersives Element mit einem Dispersionsparameter $D_{M232}$, wobei

wobei die dispersiven Elemente mit nominell identischen Dispersionsparametern $D_{M231} = D_{M232} = D_{M23}$ konfiguriert sind und die OFT-Anordnung weiterhin so konfigurierbar ist, dass $D_{M23} = 1/K_{M23}$.

5. OFDM-Sender nach Anspruch 1, der ein OTDM-zu-OFDM-Konverter ist, wobei der Sender weiterhin dazu beschaffen ist, das N-OTDM-Eingangssignal aus einem OTDM-Eingangssignal zu generieren, wobei der Sender weiterhin ein Spektralfilter umfasst, wobei das Spektralfilter im Wesentlichen ein Raised-Cosine-Filter ist, das zum Umwandeln des OTDM-Eingangssignals in das N-OTDM-Eingangssignal konfiguriert ist.

6. OFDM-Sender nach Anspruch 5, wobei das Wurzel-Kosinus-Filter ein wellenlängenselektiver Schalter (WSS) ist oder ein solches umfasst.

7. Sender für ein ausschließlich optisches orthogonales
Frequenzmultiplexverfahren (OFMD) zum Erzeugen eines OFDM-Ausgangssignals aus einem Flat-Top-Eingangssignal eines optischen Zeitmultiplexverfahrens (OTDM) mit einem im Wesentlichen Flat-Top-Spektrum, wobei der Sender eine erste Anordnung für eine optische Zeitbereichs-Fouriertransformation (OFT) umfasst, wobei die erste OFT-Anordnung eine K-D-K-Konfiguration aufweist und in der genannten Reihenfolge Folgendes umfasst:

- einen ersten Phasenmodulator, wobei der erste Phasenmodulator zum Ausüben einer parabolischen Phasenmodulation konfigurierbar ist, um so ein optisches Signal mittels im Wesentlichen linearem Phasen-Chirpen auf eine Chirp-Rate $K_{M321}$ einzustellen,
- ein dispersives Element mit einem Dispersionsparameter $D_{M32}$, und
- einen zweiten Phasenmodulator, der ebenfalls zum Ausüben einer parabolischen Phasenmodulation konfigurierbar ist, um so ein optisches Signal mittels im Wesentlichen linearem Phasen-Chirpen auf eine Chirp-Rate $K_{M322}$ einzustellen,
wobei die Phasenmodulatoren so konfiguriert sind, dass im Wesentlichen $K_{M321} = K_{M322} = K_{M32}$, und weiterhin so, dass $D_{M32} = 1/K_{M32}$, wo-

bei der Sender weiterhin einen Impulsformer umfasst, der nach der OFT-Anordnung vorgesehen ist und zum Bereitstellen von im Wesentlichen Rechteckimpulsen mit einer temporalen Breite von $T_{M42}$ betreibbar ist.

8. OFDM-Sender nach Anspruch 7, der ein DWDM-zu-OFDM-Konverter ist, wobei der Sender weiterhin dazu beschaffen ist, das OTDM-Flat-Top-Eingangssignal aus einem DWDM-Eingangssignal zu generieren, wobei der Sender weiterhin umfasst:

- eine dritte OFT-Anordnung zum Umwandeln des DWDM-Eingangssignals in das OTDM-Flat-Top-Eingangssignal.

9. OFDM-Sender nach Anspruch 8, wobei die dritte OFT-Anordnung die K-D-K-Konfiguration aufweist und in der genannten Reihenfolge Folgendes umfasst

- einen ersten Phasenmodulator, wobei der erste Phasenmodulator zum Ausüben einer parabolischen Phasenmodulation konfigurierbar ist, um so ein optisches Signal mittels im Wesentlichen linearem Phasen-Chirpen auf eine Chirp-Rate $K_{M141}$ einzustellen,
- ein dispersives Element mit einem Dispersionsparameter $D_{M14}$, und
- einen zweiten Phasenmodulator, der ebenfalls zum Ausüben einer parabolischen Phasenmodulation konfigurierbar ist, um so ein optisches Signal mittels im Wesentlichen linearem Phasen-Chirpen auf die Chirp-Rate $K_{M142}$ einzustellen, wobei
die Phasenmodulatoren zum Aufweisen von nominell identischen Chirp-Raten $K_{M141} = K_{M142} = K_{M14}$ konfigurierbar sind und die dritte OFT-Anordnung weiterhin so konfigurierbar ist, dass $D_{M14} = 1/K_{M14}$.

10. OFDM-Sender nach Anspruch 8, wobei die dritte OFT-Anordnung die D-K-D-Konfiguration aufweist und in der genannten Reihenfolge Folgendes umfasst

- ein erstes dispersives Element mit einem Dispersionsparameter $D_{M141}$,
- einen Phasenmodulator, der zum Ausüben einer parabolischen Phasenmodulation konfigurierbar ist, um so ein optisches Signal mittels im Wesentlichen linearem Phasen-Chirpen auf eine Chirp-Rate $K_{M14}$ einzustellen, und
- ein zweites dispersives Element mit einem Dispersionsparameter $D_{M142}$, wobei
wobei die dispersiven Elemente mit nominell identischen Dispersionsparametern $D_{M141} = D_{M142} = D_{M14}$ konfiguriert sind und die OFT-Anordnung weiterhin so konfigurierbar ist, dass $D_{M14} = 1/K_{M14}$.

11. OFDM-Sender nach Anspruch 8, wobei die dritte OFT-Anordnung eine K-D-Konfiguration aufweist und in der genannten Reihenfolge Folgendes umfasst

    - einen Phasenmodulator, der zum Ausüben einer parabolischen Phasenmodulation konfigurierbar ist, um so ein optisches Signal mittels im Wesentlichen linearem Phasen-Chirpen auf eine Chirp-Rate $K_{M14}$ einzustellen, und
    - ein dispersives Element mit einem Dispersionsparameter $D_{M14}$, wobei die OFT-Anordnung weiterhin so konfigurierbar ist, dass $D_{M14} = 1/K_{M14}$.

12. OFDM-Sender nach Anspruch 7, der ein OTDM-zu-OFDM-Konverter ist, wobei der Sender weiterhin dazu beschaffen ist, das OTDM-Flat-Top-Eingangssignal aus einem OTDM-Eingangssignal zu generieren, wobei der Sender weiterhin umfasst:

    - ein Spektralfilter, das zum Umwandeln des OTDM-Eingangssignals in das OTDM-Flat-Top-Eingangssignal konfiguriert ist.

13. Verfahren zum Erzeugen eines OFDM (Orthogonal Frequency Division Multiplexing)-Signals aus einem DWDM-Eingangssignal oder einem OTDM-Eingangssignal, umfassend entweder:

    - Umwandeln des DWDM-Eingangssignals in ein N-OTDM-Signal durch

        o temporales Wellenformen des DWDM-Eingangssignals und
        ∘ optische Fouriertransformation des temporal geformten Signals in das N-OTDM-Signal, oder

    - Umwandeln des OTDM-Eingangssignals in das N-OTDM-Signal durch Spektralfiltern des OTDM-Eingangssignals mit einem im Wesentlichen spektral optischen Rechteckfilter,
    wobei das Verfahren weiterhin eine optische Fouriertransformation des N-OTDM-Signals in das OFDM-Signal unter Verwendung einer OFT-Anordnung mit einer K-D-K-Konfiguration umfasst.

14. Verfahren zum Erzeugen eines OFDM (Orthogonal Frequency Division Multiplexing)-Signals aus einem DWDM-Eingangssignal oder einem OTDM-Eingangssignal, umfassend:

    - Erzeugen eines OTDM-Flat-Top-Signals mit einem im Wesentlichen Flat-Top-Spektralprofil durch entweder

        ∘ optische Zeitbereich-Fouriertransformation des WDM-Eingangssignals in das OTDM-Flat-Top-Signal, oder
        ∘ Spektralfiltern des OTDM-Eingangssignals zum Erzeugen des OTDM-Flat-Top-Eingangssignals,
    wobei das Verfahren umfasst:

        - optisches Fouriertransformieren des OTDM-Flat-Top-Signals unter Verwendung einer OFT-Anordnung mit einer K-D-K-Konfiguration und
        - temporales Formen des mittels Fouriertransformation geformten Signals in das OFDM-Signal.

**Revendications**

1. Transmetteur tout optique de multiplexage par répartition orthogonale de la fréquence (OFDM) destiné à générer un signal de sortie OFDM à partir d'un signal d'entrée de Nyquist à multiplexage temporel optique (N-OTDM), le transmetteur comprenant un premier assemblage à transformée de Fourier optique dans le domaine temporel (OFT), le premier assemblage OFT ayant une configuration K-D-K et comprenant dans cet ordre

    - un premier modulateur de phase, le premier modulateur de phase étant configurable pour exercer une modulation de phase parabolique de façon à chirper en fréquence de manière sensiblement linéaire un signal optique afin qu'il présente un taux de chirp d'impulsions $K_{M311}$
    - un élément dispersif ayant un paramètre de dispersion $D_{M31}$, et
    - un second modulateur de phase également configurable pour exercer une modulation de phase parabolique de façon à chirper en fréquence de manière sensiblement linéaire un signal optique afin qu'il présente un taux de chirp d'impulsions $K_{M312}$,
    dans lequel les modulateurs de phase sont configurables pour produire des taux de chirp d'impulsions nominaux identiques, $K_{M311} = K_{M312} = K_{M31}$, et l'assemblage OFT est en outre configurable de sorte que $D_{M31} = 1/K_{M31}$.

2. Transmetteur OFDM selon la revendication 1, le transmetteur étant un convertisseur de multiplexage en longueur d'onde dense (DWDM) à OFDM, dans lequel le transmetteur est en outre adapté pour générer le signal d'entrée N-OTDM à partir d'un signal d'entrée DWDM comprenant un nombre de canaux DWDM, le transmetteur comprenant en outre :

- un formeur d'impulsions configuré pour former temporairement des impulsions du signal d'entrée DWDM en un signal intermédiaire de type OFDM, le signal intermédiaire de type OFDM ayant une forme d'impulsions temporelles sensiblement rectangulaire, et une répartition en fréquence de chaque canal de forme sensiblement sinus cardinal, le transmetteur comprenant en outre
- un deuxième assemblage OFT destiné à convertir le signal intermédiaire de type OFDM en signal d'entrée N-OTDM.

3. Transmetteur OFDM selon la revendication 2, dans lequel le deuxième assemblage OFT a une configuration K-D-K, comprenant dans cet ordre

- un premier modulateur de phase, le premier modulateur de phase étant configurable pour exercer une modulation de phase parabolique de façon à chirper en phase de manière sensiblement linéaire un signal optique afin qu'il présente un taux de chirp $K_{M231}$,
- un élément dispersif ayant un paramètre de dispersion $D_{M23}$, et
- un second modulateur de phase également configurable pour exercer une modulation de phase parabolique de façon à chirper en phase de manière sensiblement linéaire un signal optique afin qu'il présente le taux de chirp $K_{M232}$, dans lequel
les modulateurs de phase sont configurables pour produire des taux de chirp nominaux identiques, $K_{M231} = K_{M232} = K_{M23}$, et l'assemblage OFT est en outre configurable de sorte que $D_{M23} = 1/K_{M23}$.

4. Transmetteur OFDM selon la revendication 2, dans lequel le deuxième assemblage OFT a une configuration D-K-D, comprenant dans cet ordre

- un premier élément dispersif ayant un paramètre de dispersion $D_{M231}$,
- un modulateur de phase configurable pour exercer une modulation de phase parabolique de façon à chirper en phase de manière sensiblement linéaire un signal optique afin qu'il présente un taux de chirp $K_{M23}$, et
- un second élément dispersif ayant un paramètre de dispersion $D_{M232}$, dans lequel
les éléments dispersifs sont configurés pour posséder des paramètres de dispersion nominaux identiques, $D_{M231} = D_{M232} = D_{M23}$, et l'assemblage OFT est en outre configurable de sorte que $D_{M23} = 1/K_{M23}$.

5. Transmetteur OFDM selon la revendication 1, le transmetteur étant un convertisseur OTDM à OFDM, dans lequel le transmetteur est en outre adapté pour générer le signal d'entrée N-OTDM à partir d'un signal d'entrée OTDM, le transmetteur comprenant en outre un filtre spectral, le filtre spectral étant sensiblement un filtre à réponse en cosinus carré configuré pour convertir le signal d'entrée OTDM en signal d'entrée N-OTDM.

6. Transmetteur OFDM selon la revendication 5, dans lequel le filtre à réponse en cosinus carré est ou comprend un commutateur sélectif en longueur d'onde (WSS).

7. Transmetteur tout optique de multiplexage par répartition orthogonale de la fréquence (OFDM) destiné à générer un signal de sortie OFDM à partir d'un signal d'entrée à sommet plat à multiplexage temporel optique (OTDM) présentant un spectre à sommet sensiblement plat, le transmetteur comprenant un premier assemblage à transformée de Fourier optique dans le domaine temporel (OFT), le premier assemblage OFT ayant une configuration K-D-K et comprenant dans cet ordre :

- un premier modulateur de phase, le premier modulateur de phase étant configurable pour exercer une modulation de phase parabolique de façon à chirper en phase de manière sensiblement linéaire un signal optique afin qu'il présente un taux de chirp $K_{M321}$
- un élément dispersif ayant un paramètre de dispersion $D_{M32}$, et
- un second modulateur de phase également configurable pour exercer une modulation de phase parabolique de façon à chirper en phase de manière sensiblement linéaire un signal optique afin qu'il présente un taux de chirp $K_{M322}$, dans lequel les modulateurs de phase sont configurés afin d'obtenir sensiblement $K_{M321} = K_{M322} = K_{M32}$, et en outre de sorte que $D_{M32} = 1/K_{M32}$, le transmetteur comprenant en outre un formeur d'impulsions prévu après l'assemblage OFT et pouvant fonctionner pour produire des impulsions sensiblement rectangulaires d'une largeur temporelle de $T_{M42}$.

8. Transmetteur OFDM selon la revendication 7, le transmetteur étant un convertisseur DWDM à OFDM, dans lequel le transmetteur est en outre adapté pour générer le signal d'entrée OTDM à sommet plat à partir d'un signal d'entrée DWDM, le transmetteur comprenant en outre :

- un troisième assemblage OFT destiné à convertir le signal d'entrée DWDM en signal d'entrée OTDM à sommet plat.

**9.** Transmetteur OFDM selon la revendication 8, dans lequel le troisième assemblage OFT a une configuration K-D-K et comprend dans cet ordre

- un premier modulateur de phase, le premier modulateur de phase étant configurable pour exercer une modulation de phase parabolique de façon à chirper en phase de manière sensiblement linéaire un signal optique afin qu'il présente un taux de chirp $K_{M141}$,
- un élément dispersif ayant un paramètre de dispersion $D_{M14}$, et
- un second modulateur de phase également configurable pour exercer une modulation de phase parabolique de façon à chirper en phase de manière sensiblement linéaire un signal optique afin qu'il présente le taux de chirp $K_{M142}$, dans lequel

les modulateurs de phase sont configurables pour posséder des taux de chirp nominaux identiques, $K_{M141} = K_{M142} = K_{M14}$, et le troisième assemblage OFT est en outre configurable de sorte que $D_{M14} = 1/K_{M14}$.

**10.** Transmetteur OFDM selon la revendication 8, dans lequel le troisième assemblage OFT a une configuration D-K-D et comprend dans cet ordre

- un premier élément dispersif ayant un paramètre de dispersion $D_{M141}$,
- un modulateur de phase configurable pour exercer une modulation de phase parabolique de façon à chirper en phase de manière sensiblement linéaire un signal optique afin qu'il présente un taux de chirp $K_{M14}$, et
- un second élément dispersif ayant un paramètre de dispersion $D_{M142}$, dans lequel

les éléments dispersifs sont configurés pour posséder des paramètres de dispersion nominaux identiques, $D_{M141} = D_{M142} = D_{M14}$, et l'assemblage OFT est en outre configurable de sorte que $D_{M14} = 1/K_{M14}$.

**11.** Transmetteur OFDM selon la revendication 8, dans lequel le troisième assemblage OFT a une configuration K-D et comprend dans cet ordre

- un modulateur de phase configurable pour exercer une modulation de phase parabolique de façon à chirper en phase de manière sensiblement linéaire un signal optique afin qu'il présente un taux de chirp $K_{M14}$, et
- un élément dispersif ayant un paramètre de dispersion $D_{M14}$, dans lequel l'assemblage OFT est en outre configurable de sorte que $D_{M14} = 1/K_{M14}$.

**12.** Transmetteur OFDM selon la revendication 7, le transmetteur étant un convertisseur OTDM à OFDM, dans lequel le transmetteur est en outre adapté pour générer le signal d'entrée OTDM à sommet plat à partir d'un signal d'entrée OTDM, le transmetteur comprenant en outre :

- un filtre spectral configuré pour convertir le signal d'entrée OTDM en signal d'entrée OTDM à sommet plat.

**13.** Procédé de génération d'un signal à multiplexage par répartition orthogonale de la fréquence (OFDM) à partir d'un signal d'entrée DWDM ou d'un signal d'entrée OTDM, consistant, soit :

- à convertir le signal d'entrée DWDM en signal N-OTDM par

∘ formation temporelle de la forme d'onde du signal d'entrée DWDM, et
∘ transformation de Fourier optique du signal temporel formé en signal N-OTDM, soit

- à convertir le signal d'entrée OTDM en signal N-OTDM par filtrage spectral du signal d'entrée OTDM par un filtre optique à spectre sensiblement rectangulaire,
le procédé comprenant en outre la transformation de Fourier optique du signal N-OTDM en signal OFDM au moyen de l'utilisation d'un assemblage OFT ayant une configuration K-D-K.

**14.** Procédé de génération d'un signal à multiplexage par répartition orthogonale de la fréquence (OFDM) à partir d'un signal d'entrée DWDM ou d'un signal d'entrée OTDM, consistant à :

- générer un signal OTDM à sommet plat ayant un profil spectral à sommet sensiblement plat, par

∘ transformation de Fourier optique temporelle du signal d'entrée WDM en signal OTDM à sommet plat, ou
∘ filtrage spectral du signal d'entrée OTDM pour obtenir le signal OTDM à sommet plat,
le procédé comprenant :

- la transformation de Fourier optique temporelle du signal OTDM à sommet plat au moyen de l'utilisation d'un assemblage OFT ayant une configuration K-D-K, et
- la formation temporelle du signal à transformée de Fourier en signal OFDM.

FIG. 1

FIG. 2

FIG. 3

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **HILLERKUSS et al.** 26 Tbit s-1 line-rate super-channel transmission utilizing all-optical fast Fourier transform processing. *Nature Photon.,* 2011, vol. 5, 364-371
- **LOWERY ; DU.** All-optical OFDM transmitter design using AWGRs and low-bandwidth modulators. *Optics Express,* 2011, vol. 19.17, 15696-15704
- **HILLERKUSS et al.** Simple all-optical .FFT scheme enabling Tbit/s real-time signal processing. *Opt. Express,* 2010, vol. 18 (9), 9324-9340
- Flexible All-Optical OFDM using WSSs. **DU et al.** National Fiber Optic Engineers Conference. Optical Society of America, 2013
- **JUNHE ZHOU.** *All-Optical Discrete Fourier Transform Based on Multilevel Phase Modulation and a Dispersive Element*
- **HU et al.** 320 Gb/s Nyquist OTDM received by polarization-insensitive time-domain OFT. *Optics Express,* 2013, vol. 22 (1), 110